**Europäisches Patentamt**

**European Patent Office**

**Office européen des brevets**

(19)

(11) Veröffentlichungsnummer : **0 183 748**
**B1**

(12)

# EUROPÄISCHE PATENTSCHRIFT

(45) Veröffentlichungstag der Patentschrift :
**19.10.88**

(21) Anmeldenummer : **85902536.3**

(22) Anmeldetag : **24.05.85**

(86) Internationale Anmeldenummer :
**PCT/EP 85/00252**

(87) Internationale Veröffentlichungsnummer :
**WO/8505661 (19.12.85 Gazette 85/27)**

(51) Int. Cl.⁴ : **F 16 D 65/847, B 60 B 19/10,**
**B 60 T 1/06**

(54) **RADBAUGRUPPE MIT SCHEIBENBREMSE FÜR FAHRZEUGE.**

(30) Priorität : **05.06.84 DE 8417138 U**

(43) Veröffentlichungstag der Anmeldung :
**11.06.86 Patentblatt 86/24**

(45) Bekanntmachung des Hinweises auf die Patenterteilung : **19.10.88 Patentblatt 88/42**

(84) Benannte Vertragsstaaten :
**DE FR GB IT**

(56) Entgegenhaltungen :
**DE-A- 3 009 006**
**DE-B- 1 069 478**
**DE-B- 1 113 149**
**GB-A- 275 065**
**GB-A- 275 132**
**GB-A- 897 619**
**GB-A- 914 961**
**US-A- 3 059 730**

(73) Patentinhaber : **LUCAS INDUSTRIES public limited**
**company**
**Great King Street**
**Birmingham, B19 2XF West Midlands (GB)**

(72) Erfinder : **RATH, Heinrich, Bernhard**
**Sebastian-Kneipp-Strasse 73a**
**D-5414 Vollendar (DE)**

(74) Vertreter : **Wuesthoff, Franz, Dr.-Ing. et al**
**Patentanwälte Wuesthoff -v. Pechmann-Behrens-**
**Goetz Schweigerstrasse 2**
**D-8000 München 90 (DE)**

## Beschreibung

Die Erfindung betrifft eine Radbaugruppe mit Scheibenbremse für Fahrzeuge, bestehend aus

- einem topfförmigen Scheibenträger mit einem Basisteil, das an einer Radnabe befestigt ist, sowie einem Trommelteil, das sich in geringem radialem Abstand von einer Radfelge axial nach innen erstreckt und mit dem radial äußeren Rand einer Bremsscheibe fest verbunden ist,

- einem Bremssattel, der an einem feststehenden Radlagergehäuse abgestützt ist, den radial inneren Rand der Bremsscheibe umgreift, beiderseits der Bremsscheibe angeordnete Bremsbacken abstützt und mindestens auf einer Seite der Bremsscheibe eine Betätigungsvorrichtung aufweist, und

- Lüftungskanälen radial innerhalb der Radfelge.

Bei einer bekannten Radbaugruppe dieser Gattung (GB-A-897 619) ist der topfförmige Scheibenträger vom zugehörigen Rad vollständig getrennt ausgebildet und sein Basisteil ist zwischen der Radnabe und einem Mittelteil einer in üblicher Weise aus Blech gepreßten, mit der Radnabe verschraubten Radschüssel eingespannt. Die Bremsscheibe erstreckt sich vom Rand des Trommelteils radial nach innen, hat aber einen außerhalb dieses Randes angeordneten Kranz mit Lüftungslöchern und Lüfterschaufeln zur Erzeugung eines Luftstromes, der zwischen Radfelge und Außenwand des Trommelteils im wesentlichen parallel zur Radachse hindurchströmen und die Radbaugruppe durch Löcher im äußeren Bereich der Radschüssel verlassen soll. Dadurch soll ein Teil der beim Bremsen an der Bremsscheibe entstehenden Wärme, der vom Trommelteil aufgenommen wird, durch den Luftstrom abgeführt werden. Mit Durchbrüchen im Scheibenträger kann auch eine diagonale Durchlüftung der Bremse ermöglicht werden (Fig. 3 der GB-A-897 619). Es hat sich jedoch herausgestellt, daß mit diesen Maßnahmen bei längeren und kräftigeren Bremsungen ein Wärmestau am topfförmigen Scheibenträger nicht zu vermeiden ist und infolgedessen die Gefahr besteht, daß nicht nur die Bremse selbst, sondern in ungünstigen Fällen auch die Radfelge und über die Radnabe ein angrenzendes Radlager unzulässig erhitzt wird.

Eine ebenfalls diagonale Durchlüftung ist bei einer bekannten Radbaugruppe mit Trommelbremse (GB-A-275 065) vorgesehen. Dort sind in einem doppelwandigen Bremstrommelträger im wesentlichen radiale Lüftungskanäle ausgebildet, die eine axial äußere, radial innere Eintrittsöffnung und eine axial innere, radial äußere Austrittsöffnung haben. Die Austrittsöffnung ist so angeordnet, daß die Bremstrommel an ihrer radial inneren Seite von dem Luftstrom aus den radialen Lüftungskanälen gekühlt wird.

Bei einer anderen bekannten Radbaugruppe mit Trommelbremse (DE-B-1 069 478) ist die axial außen angeordnete Rückwand der Bremstrommel als Radträger ausgebildet ; daran ist die Radschüssel mit Radmuttern festgeschraubt. Die Rückwand ist nach Art eines Radialgebläses ausgebildet, indem um die Radnabe herum zwischen auf einer Kreisringfläche gleichmäßig verteilten Schaufelrippen Luftkanäle angeordnet sind. Im Inneren der Bremstrommel sind diese Luftkanäle in axialer Richtung durch eine radiale Blechscheibe abgedeckt, so daß die in radialer Richtung weisenden Austrittsöffnungen Luft gegen die Bremsfläche blasen. Am äußeren Umfang der Bremstrommel sind gleichmäßig verteilt axiale Schaufelrippen für die Außenbelüftung der Bremstrommel angeordnet. Diese Schaufelrippen setzen sich an der axial äußeren Seite der Rückwand der Bremstrommel fort bis zu einer ringförmigen Lufteintrittsöffnung zwischen dem radial inneren Rand der Radschüssel und einem Rohrflansch, der an der Rückwand der Bremstrommel axial außen ausgebildet ist und die Eintrittsöffnungen für die Innenbelüftung der Bremstrommel radial nach außen begrenzt. So werden für die Innen- und Außenbelüftung der Bremstrommel getrennte Luftströme gebildet.

Der Erfindung liegt die Aufgabe zugrunde, eine Radbaugruppe mit Scheibenbremse derart weiterzubilden, daß die Gefahr einer Überhitzung vermindert wird.

Diese Aufgabe ist bei einer ersten Ausführungsform der Erfindung ausgehend von einer Radbaugruppe der eingangs beschriebenen Gattung dadurch gelöst, daß

- das Basisteil des Scheibenträgers doppelwandig ausgebildet ist und einen Innenraum aufweist, der durch mindestens annähernd radiale Lüfterschaufeln in Lüftungskanäle unterteilt ist, die von der axial äußeren Seite des Scheibenträgers ausgehen und axial nach außen münden, und

- der Scheibenträger gemeinsam mit der Radfelge und einer an dem Radlagergehäuse befestigten, axial inneren Wand einen Raum begrenzt, der die Bremsscheibe sowie mindestens einen wesentlichen Teil des Bremssattels enthält und an eine gesonderte Lüftungsleitung angeschlossen ist.

Damit wird erreicht, daß die von der Bremsscheibe auf das Trommelteil übergeleitete Wärme von dem gut durchlüfteten Basisteil derart rasch an die Umgebungsluft abgegeben wird, daß der gesamte Scheibenträger und somit auch die Radnabe und das Radlager verhältnismäßig kühl gehalten werden. Die Scheibenbremse, die im wesentlichen innerhalb eines von diesen Bauelementen umschlossenen Ringraumes angeordnet ist, wird durch die erfindungsgemäßen Maßnahmen ebenfalls besser als bisher vor Überhitzung geschützt. Entsprechendes gilt für die Radfelge, auf die von dem verhältnismäßig kühl bleibenden Scheibenträger weniger Wärme als bisher durch Strahlung und Wärmeleitung übertragen wird. Im übrigen hat das Basisteil des Scheibenträgers in seiner erfindungsgemäßen Ausgestaltung eine größere Masse und somit auch eine größere Wärmekapazität als bisher und kann daher bei starken Bremsungen von der Bremsscheibe große Wärmemengen in kurzer Zeit übernehmen und diese dann allmählich an die Umgebung ableiten und abstrahlen. Bei der beschriebenen Ausführungsform der Erfindung sorgt die Lüftungsleitung für eine Zwangsbelüftung des genannten Raumes ; zu diesem Zweck kann die Lüftungsleitung beispielsweise an ein Gebläse oder an ein Saugrohr eines Verbrennungsmotors oder an ein Venturirohr in einer Auspuffanlage angeschlossen sein.

Bei der ersten Ausführungsform der Erfindung kann die axial innere Wand einen Kragen aufweisen, der den radial äußeren Rand der Bremsscheibe und den angrenzenden Bereich des Trommelteils umschließt. Dadurch wird die Radfelge noch wirksamer gegen von der Bremsscheibe und dem angrenzenden Bereich des Trommelteils ausgehende Strahlungshitze geschützt.

Bei einer zweiten Ausführungsform der Erfindung ist wie bei dem vorausgesetzten Stand der Technik gemäß der GB-A-897 619 das Basisteil des Scheibenträgers axial innerhalb einer selbständigen Radschüssel angeordnet. Eine Radbaugruppe mit diesen Merkmalen ist gemäß der zweiten Ausführungsform der Erfindung wiederum dadurch weitergebildet, daß das Basisteil des Scheibenträgers doppelwandig ausgebildet ist und einen Innenraum aufweist, der durch mindestens annähernd radiale Lüfterschaufeln in Lüftungskanäle unterteilt ist. Diese Lüftungskanäle dienen bei der zweiten Ausführungsform der Erfindung zur Bildung eines Luftstroms, der axial von innen nach außen in die radial inneren Enden dieser Lüftungskanäle eintritt. Zwischen dem erfindungsgemäß doppelwandigen Basisteil und der Radschüssel sind weitere im wesentlichen radiale Lüftungskanäle ausgebildet, die an der axial äußeren Seite der Radschüssel beginnen und enden.

Bei dieser zweiten Ausführungsform ist es besonders zweckmäßig, wenn die weiteren Lüftungskanäle voneinander durch Lüfterschaufeln getrennt sind, die an der axial inneren Seite der Radschüssel ausgebildet sind und mindestens annähernd bis zum doppelwandigen Basisteil reichen.

Durch die Lüftungskanäle wird im Betrieb frische Luft von der axial äußeren Seite der Radschüssel angesaugt und unmittelbar an der Außenwand des doppelwandigen Basisteils entlanggeführt, wodurch das Basisteil besonders wirksam gekühlt wird. Die Radschüssel wird durch die an ihrer axial inneren Seite ausgebildeten Lüfterschaufeln wirksamer versteift als es durch an ihrer Außenseite angeordnete Rippen vergleichbarer Größe möglich wäre. Die Außenseite der Radschüssel kann völlig glatt sein, so daß sie dem Fahrtwind wenig Widerstand bietet.

Ausführungsbeispiele der Erfindung werden im folgenden anhand schematischer Zeichnungen mit weiteren Einzelheiten erläutert. In den Zeichnungen ist

Fig.1 ein Axialschnitt einer ersten Ausführungsform der erfindungsgemäßen Radbaugruppe,

Fig.2 der Radialschnitt II-II in Fig.1 und

Fig.3 ein nur halbseitig gezeichneter Axialschnitt einer zweiten Ausführungsform der erfindungsgemäßen Radbaugruppe.

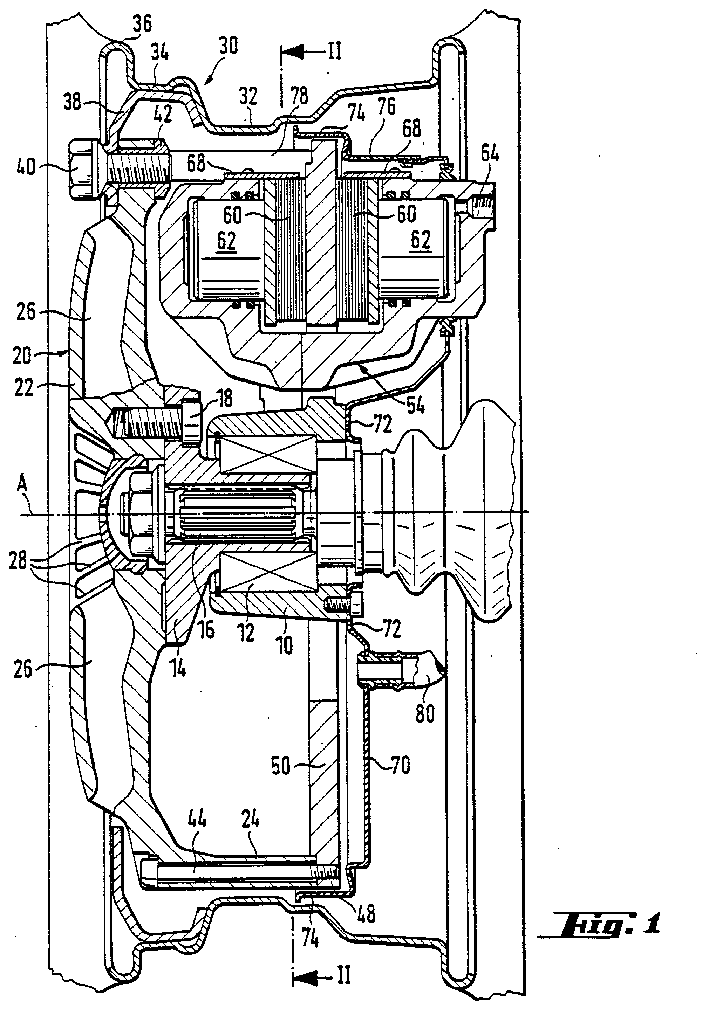

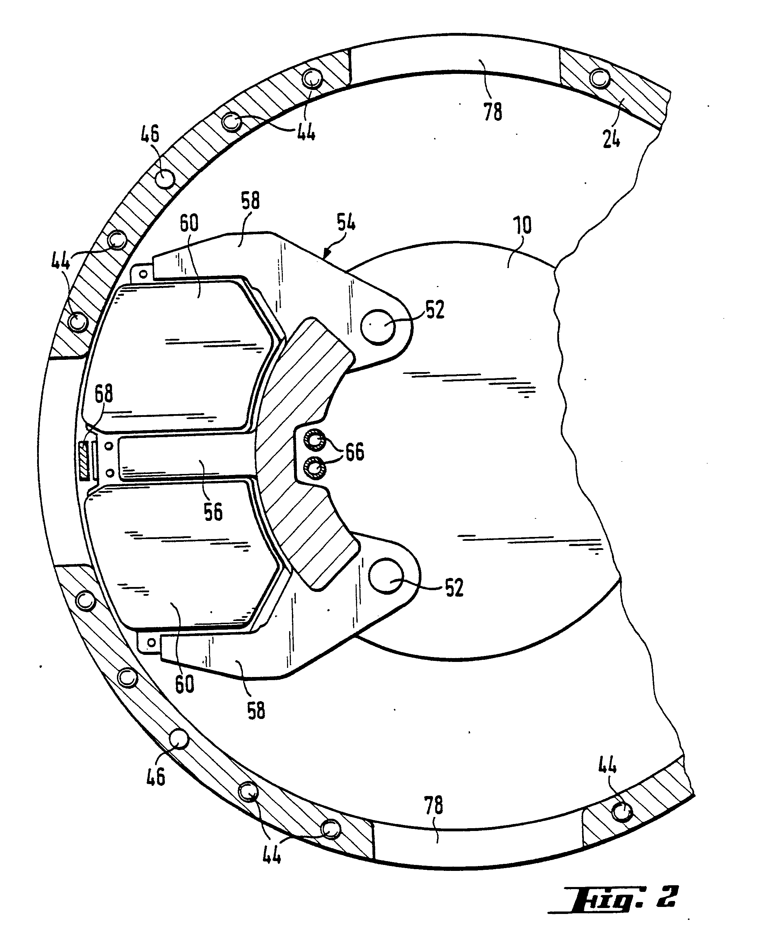

Die in Fig.1 und 2 dargestellte Radbaugruppe ist einem Radlagergehäuse 10 zugeordnet, in dem mittels nur angedeuteter Radlager 12 eine Radnabe 14 um eine Achse A drehantreibbar gelagert ist. Die Radnabe 14 ist einerseits mit einem Wellenzapfen 16 und andererseits durch Schrauben 18 mit einem Scheibenträger 20 fest verbunden.

Der Scheibenträger 20 ist topfförmig und hat ein Basisteil 22, das sich im wesentlichen normal zur Achse A erstreckt, sowie ein mit dieser Achse gleichachsiges, zylindrisches Trommelteil 24. In das Basisteil 22 sind im wesentlichen radial verlaufende, gegebenenfalls gekrümmte Lüftungskanäle 26 eingearbeitet, die gegeneinander durch Lüfterschaufeln 28 abgegrenzt und in beiden axialen Richtungen abgedeckt sind, so daß sie im Querschnitt vollständig vom Material des im dargestellten Beispiel aus Leichtmetall gegossenen Scheibenträgers 20 umschlossen sind.

Der Scheibenträger 20 ist von einer Radfelge 30 umgeben, die ein in geringem radialen Abstand außerhalb des Trommelteils 24 angeordnetes Felgenbett 32 sowie beiderseits davon je eine Felgenschulter 34 und ein Felgenhorn 36 aufweist ; diese Felgenteile sind in üblicher Weise einstückig aus Stahlblech hergestellt. Zur Radfelge 30 gehört ferner ein Felgenfuß 38, der mit dem Felgenbett 32 sowie der in Fig.1 linken, in bezug auf das Fahrzeug äußeren Felgenschulter 34 verschweißt ist und sich innerhalb des äußeren Felgenhorns 36 im wesentlichen radial nach innen erstreckt.

Der Felgenfuß 38 ist mit Schrauben 40 der zur Radbefestigung üblichen Art am Scheibenträger 20 befestigt ; die Schrauben 40 sind in Gewindebüchsen 42 aus Stahl eingeschraubt, die in den radial äußeren Rand des Basisteils 22 axial von innen her eingesetzt sind. Das Basisteil 22 bildet auf diese Weise eine Radschüssel.

Das Trommelteil 24 weist in vier Gruppen achsparallel angeordnete Durchgangslöcher auf, durch die sich je eine Dehnschraube 44 hindurcherstreckt. Ebenfalls achsparallel sind in das Trommelteil 24 mindestens zwei Paßstifte 46 eingesetzt. Mittels dieser Dehnschrauben 44 und Paßstifte 46 ist am Trommelteil 24 ein abgesetzter äußerer Randabschnitt 48 einer im übrigen ebenen, ringförmigen Bremsscheibe 50 befestigt.

Am Radlagergehäuse 10 ist mit einem Paar Schrauben 52 ein Bremssattel 54 befestigt, der einen radialen Mittelsteg 56 und zwei dazu parallele äußere Arme 58 aufweist. Mittelsteg 56 und äußere Arme 58 umgreifen den radial inneren Rand der Bremsscheibe 50 und nehmen auf deren beiden Seiten je ein Paar Bremsbacken 60 zwischen sich auf. Der Bremssattel 54 ist bei dem in Fig.1 und 2 dargestellten Beispiel ein Festsattel, der beiderseits der Bremsscheibe 50 je ein Paar hydraulischer Betätigungsvorrichtungen 62 aufweist. Die beiden Betätigungsvorrichtungen 62 auf der in bezug auf das Fahrzeug inneren, in Fig.1 rechten Seite sind mit je einem Schlauchanschluß 64 für Bremsschläuche einer Zweikreis-Bremsanlage ausgerüstet und gemäß Fig.2 durch getrennte Rohrleitungen 66 mit der jeweils zugehörigen Betätigungsvorrichtung 62 auf der anderen Seite der Bremsscheibe 50 verbunden.

Jedes Paar Bremsbacken 60 ist durch eine mittig angeordnete Niederhaltefeder 68 an radialen Bewegungen gehindert.

Das Radlagergehäuse 10, das Basisteil 22 und das Felgenbett 32 begrenzen einen Ringraum, in dem die beschriebene Bremse angeordnet ist. Dieser Ringraum ist in bezug auf das Fahrzeug axial nach innen durch eine dünne und entsprechend leichte Wand 70 aus steifem Blech oder Kunststoff abgeschlossen. Die Wand 70 hat einen radial inneren Rand 72, der an das Radlagergehäuse 10 angeschraubt ist, sowie einen axial äußeren, im wesentlichen zylindrischen Kragen 74, der sich gleichachsig mit der Bremsscheibe 50 mit geringem radialem Abstand über deren äußeren Rand 48 sowie den angrenzenden Bereich des Trommelteils 24 erstreckt und gegen das Felgenbett 32 berührungsfrei abdichtet.

Die Wand 70 ist im Bereich des Bremssattels 54 gehäuseartig axial nach innen ausgebuchtet und hat dort im radial äußeren Bereich ein Schiebefenster 76 zum Auswechseln der axial inneren Bremsbacken 60. Zum Auswechseln der axial äußeren Bremsbacken 60 weist das Trommelteil 24 mehrere, im dargestellten Beispiel vier, in gleichmäßigen Umfangsabständen gegeneinander versetzte Aussparungen 78 auf. Zum Auswechseln der Bremsbacken 60 werden die Schrauben 40 gelöst und die Felge 30 samt zugehörigem Reifen abgenommen.

An der Wand 70 ist eine Lüftungsleitung 80 befestigt, durch die Luft aus dem genannten Ringraum abgesaugt wird ; zu diesem Zweck ist die Lüftungsleitung 80 beispielsweise an ein Venturirohr in der Auspuffanlage des zugehörigen Kraftfahrzeugs angeschlossen, so daß der erforderliche Unterdruck bei laufendem Motor stets zur Verfügung steht.

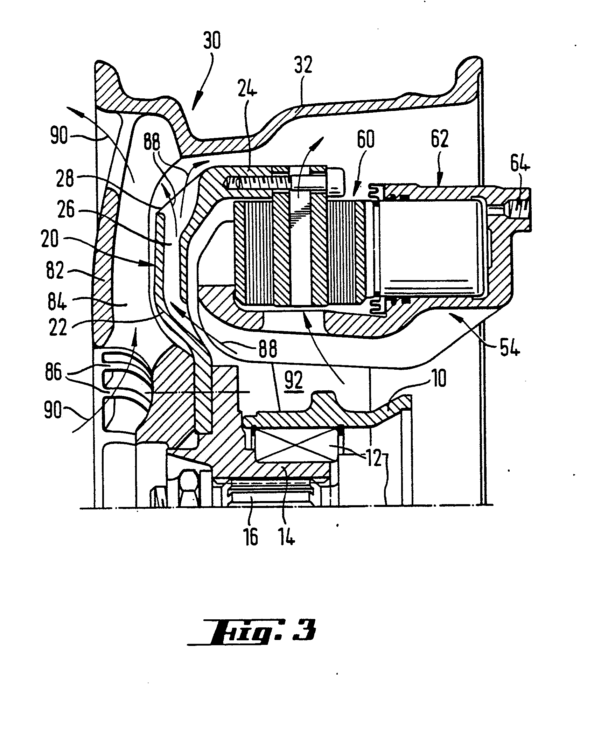

Das Ausführungsbeispiel gemäß Fig.3 unterscheidet sich von dem in Fig.1 und 2 dargestellten im wesentlichen dadurch, daß die Radfelge 30 nicht vom Scheibenträger 20 getragen wird sondern von einer üblichen, selbständigen Radschüssel 82, die gemeinsam mit dem Basisteil 22 des Scheibenträgers 20 an der Radnabe 14 befestigt ist. Zwischen dem Basisteil 22 und der Radschüssel 82 sind zusätzliche Lüftungskanäle 84 ausgebildet, die durch im wesentlichen radiale Lüfterschaufeln 86 begrenzt sind.

Gemäß Fig.3 tritt im Betrieb ein mit Pfeilen 88 angedeuteter Luftstrom axial von innen nach außen in die radial inneren Enden der Lüftungskanäle 26 ein und verläßt deren radial äußere Enden teils axial nach innen und teils axial nach außen. Die Lüftungskanäle 84 werden hingegen entsprechend den Pfeilen 90 von Luft durchströmt, die von der axial äußeren Seite der Radschüssel 82 her angesaugt und auch wieder nach dieser äußeren Seite hin abgegeben wird.

Der Bremssattel 54 ist gemäß Fig.3 axial schwimmend an einem Bremsträger 92 geführt, der am Radlagergehäuse 10 befestigt ist. An diesem Bremssattel 54 ist nur eine hydraulische Betätigungsvorrichtung 62 angeordnet. Anstelle eines solchen schwimmenden Bremssattels 54 könnte auch bei dem in Fig.3 dargestellten Ausführungsbeispiel ein Festsattel der in Fig.1 und 2 dargestellten Art vorgesehen sein. Umgekehrt könnte auch bei dem in Fig.1 und 2 dargestellten Ausführungsbeispiel ein Schwimmsattel vorgesehen sein.

**Patentansprüche**

1. Radbaugruppe mit Scheibenbremse für Fahrzeuge, bestehend aus
- einem topfförmigen Scheibenträger (20) mit einem Basisteil (22), das an einer Radnabe (14) befestigt ist, sowie einem Trommelteil (24), das sich in geringem radialem Abstand von einer Radfelge (30) axial nach innen erstreckt und mit dem radial äußeren Rand (48) einer Bremsscheibe (50) fest verbunden ist,
- einem Bremssattel (54), der an einem feststehenden Radlagergehäuse (10) abgestützt ist, den radial inneren Rand der Bremsscheibe (50) umgreift, beiderseits der Bremsscheibe angeordnete Bremsbacken (60) abstützt und mindestens auf einer Seite der Bremsscheibe (50) eine Betätigungsvorrichtung (62) aufweist, und
- Lüftungskanälen (26) radial innerhalb der Radfelge (30), dadurch gekennzeichnet, daß
- das Basisteil (22) des Scheibenträgers (20) doppelwandig ausgebildet ist und einen Innenraum aufweist, der durch mindestens annähernd radiale Lüfterschaufeln (28) in Lüftungskanäle (26) unterteilt ist, die von der axial äußeren Seite des Scheibenträgers (20) ausgehen und axial nach außen münden, und
- der Scheibenträger (20) gemeinsam mit der Radfelge (30) und einer an dem Radlagergehäuse (10) befestigten, axial inneren Wand (70) einen Raum begrenzt, der die Bremsscheibe (50) sowie mindestens einen wesentlichen Teil des Bremssattels (54) enthält und an eine gesonderte Lüftungsleitung (80) angeschlossen ist.

2. Radbaugruppe nach Anspruch 1, dadurch gekennzeichnet, daß die axial innere Wand (70) einen Kragen (74) aufweist, der den radial äußeren Rand (48) der Bremsscheibe (50) und den angrenzenden Bereich des Trommelteils (24) umschließt.

3. Radbaugruppe mit Scheibenbremse für Fahrzeuge, bestehend aus
- einem topfförmigen Scheibenträger (20) mit einem Basisteil (22), das axial innerhalb einer selbständigen Radschüssel (82) angeordnet und an einer Radnabe (14) befestigt ist, sowie einem Trommelteil (24), das sich in geringem radialem Abstand von einer Radfelge (30) axial nach innen erstreckt und mit dem radial äußeren Rand (48) einer Bremsscheibe (50) fest verbunden ist,

- einem Bremssattel (54), der an einem feststehenden Radlagergehäuse (10) abgestützt ist, den radial inneren Rand der Bremsscheibe (50) umgreift, beiderseits der Bremsscheibe angeordnete Bremsbacken (60) abstützt und mindestens auf einer Seite der Bremsscheibe (50) eine Betätigungsvorrichtung (62) aufweist, und

- Lüftungskanälen (26) radial innerhalb der Radfelge (30), dadurch gekennzeichnet, daß

- das Basisteil (22) des Scheibenträgers (20) doppelwandig ausgebildet ist und einen Innenraum aufweist, der durch mindestens annähernd radiale Lüfterschaufeln (28) in Lüftungskanäle (26) unterteilt ist, zur Bildung eines Luftstroms (88), der axial von innen nach außen in die radial inneren Enden dieser Lüftungskanäle (26) eintritt, und

- zwischen dem doppelwandigen Basisteil (22) und der Radschüssel (82) weitere im wesentlichen radiale Lüftungskanäle (84) ausgebildet sind, die an der axial äußeren Seite der Radschüssel (82) beginnen und enden.

4. Radbaugruppe nach Anspruch 3, dadurch gekennzeichnet, daß die weiteren Lüftungskanäle (84) voneinander durch Lüfterschaufeln (86) getrennt sind, die an der axial inneren Seite der Radschüssel (82) ausgebildet sind und mindestens annähernd bis zum doppelwandigen Basisteil (22) reichen.


## Claims

1. A wheel assembly including a disc brake for vehicles, consisting of a cup-shaped disc carrier (20) which has a base member (22) secured to a wheel hub (14) an a drum-type member (24) extending axially inwardly at a small radial spacing from a wheel rim (30) and being firmly connected to the radially outer edge (48) of a brake disc (50), a brake caliper (54) supported at a stationary wheel bearing box (10), straddling the radially inner edge of the brake disc (50), supporting brake pads (60) disposed at either side of the brake disc, and comprising an actuating device (62) at lest at one side of the brake disc (50), and vent passages (26) radially within the wheel rim (30), characterized in that the base member (22) of the disc carrier (20) is of double wall design and has an inner chamber which is subdivided into vent passages (26) by ventilation blades (28) which are at least approximately radial, said vent passages starting from the axialler outer side of the disc carrier (20) and opening axially outwardly, and the disc carrier (20) together with the wheel rim (30) and an axially inner wall (70) fixed to the wheel bearing box (10) define a space which contains the brake disc (50) and at least a substantial part of the brake caliper (54) and is connected to a separate vent pipe (80).

2. The wheel assembly as claimed in claim 1, characterized in that the axially inner wall (70) includes a collar (74) which encloses the radially outer edge (48) of the brake disc (50) and the adjoining area of the drumtype member (24).

3. A wheel assembly including a disc brake for vehicles, consisting of a cup-shaped disc carrier (20) which has a base member (22) arranged axially within an independent wheel web (82) and secured to a wheel hub (14) and a drumtype member (24) extending axially inwardly at a small radial spacing from a wheel rim (30) and being firmly connected to the radially outer edge (48) of a brake disc (50), a brake caliper (54) supported at a stationary wheel bearing box (10), straddling the radially inner edge of the brake disc (50), supporting brake pads (60) disposed at either side of the brake disc, and comprising an actuating device (62) at least at one side of the brake disc (50), and vent passages (26) radially within the wheel rim (30), characterized in that the base member (22) of the disc carrier (20) is of double wall design and has an inner chamber which is subdivided into vent passages (26) by ventilation blades (28) which are at least approximately radial, to form an air stream (88) which enters radially from the inside to the outside into the radially inner ends of these vent passages (26), and further substantially radial vent passages (84) are formed between the doublewalled base member (22) and the wheel web (82) and begin and end at the axially outer side of the wheel web (82).

4. The wheel assembly as claimed in claim 3, characterized in that the further vent passages (84) are separated from one another by ventilation blades (86) which are formed at the axially inner side of the wheel web (82) and extend at least approximately as far as the double-walled base member (22).


## Revendications

1. Sous-ensemble roue à frein à disque pour véhicules, comprenant :

- un support de disque (20) en forme de godet, comprenant une partie de base (22) qui est fixée à un moyeu de roue (14) et une partie tambour (24) qui s'étend axialement vers l'intérieur à petite distance radiale d'une jante de roue (30), et qui est assemblée rigidement au bord radialement extérieur (48) d'un disque de frein (50),

- un étrier de frein (54) qui prend appui sur un boîtier fixe de palier de roue (10), est à cheval sur le bord radialement intérieur du disque de frein (50), supporte des mâchoires de frein (60) disposées des deux côtés du disque, et présente un dispositif d'actionnement (62) au moins sur un côté du disque de frein (50), et

- des canaux de ventilation (26) situés radialement à l'intérieur de la jante de roue (30), caractérisé en ce que :

- la partie de base (22) du support de disque (20) est de configuration à double paroi, et présente une cavité intérieure qui est subdivisée par des aubes de ventilateur (28) au moins approximativement radiales, en canaux de ventilation (26) qui partent de la face axialement extérieure du support de disque (20) et débouchent axialement à l'extérieur, et en ce que

- le support de disque (20) délimite, en combinaison avec la jante de roue (30) et une paroi axialement intérieure (70) fixée au boîtier de palier de roue (10), une chambre qui renferme le disque de frein (50) ainsi qu'au moins une partie substantielle de l'étrier de frein (54), et qui est raccordée à une conduite de ventilation distincte (80).

2. Sous-ensemble roue selon la revendication 1, caractérisé en ce que la paroi axialement intérieure (70) présente un collet (74) qui entoure le bord radialement extérieur (48) du disque de frein (50) et la région adjacente de la partie tambour (24).

3. Sous-ensemble roue à frein à disque pour véhicules, composé de :

- un support de disque (20) en forme de godet, comprenant une partie de base (22) qui est disposée axialement à l'intérieur d'un chapeau de roue distinct (82) et est fixée à un moyeu de roue (14), ainsi qu'une partie tambour (24) qui s'étend axialement vers l'intérieur à petite distance radiale d'une jante de roue (30), et est assemblée rigidement au bord radialement extérieur (48) d'un disque de frein (50),

- un étrier de frein (54) qui prend appui sur un boîtier fixe de palier de roue (10), est à cheval sur le bord radialement intérieur du disque de frein (50), supporte des mâchoires de frein (60) disposées des deux côtés du disque de frein et présente un dispositif d'actionnement (62) au moins sur un côté du disque de frein (50), et

- des canaux de ventilation (26) situés radialement à l'intérieur de la jante de roue (30), caractérisé en ce que :

- la partie de base (22) du support de disque (20) est de configuration à double paroi, et présente une cavité intérieure qui est subdivisée par des aubes de ventilateur (28) au moins approximativement radiales, en canaux de ventilation (26), pour engendrer un flux d'air, qui pénètre axialement, de l'intérieur vers l'extérieur, dans les extrémités radialement intérieures de ces canaux de ventilation (26), et en ce que

- entre la partie de base à double paroi (22) et le chapeau de roue (82), sont formés d'autres canaux de ventilation (84) sensiblement radiaux, qui commencent et se terminent au droit de la face axialement extérieure du chapeau de roue (82).

4. Sous-ensemble roue selon la revendication 3, caractérisé en ce que les autres canaux de ventilation (84) sont séparés les uns des autres par des aubes de ventilateur (86) qui sont formées au droit de la face axialement intérieure du chapeau de roue (82), et s'étendent au moins approximativement jusqu'à la partie de base à double paroi (22).

**Fig. 1**

**Fig. 2**

**Fig. 3**